(19)

Europäisches Patentamt

European Patent Office

Office européen des brevets

(11) **EP 4 382 500 A1**

(12) **EUROPEAN PATENT APPLICATION**

(43) Date of publication:
**12.06.2024 Bulletin 2024/24**

(21) Application number: **22460067.6**

(22) Date of filing: **09.12.2022**

(51) International Patent Classification (IPC):
**C04B 28/14** (2006.01)        C04B 111/28 (2006.01)

(52) Cooperative Patent Classification (CPC):
(C-Sets available)
**C04B 28/145;** C04B 2111/28        (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **"ELPOLOGISTYKA" SPOKA Z
OGRANICZONA
ODPOWIEDZIALNOSCIA
28-230 Polaniec (PL)**

(72) Inventors:
• **Twarowska, Anna**
  **25-669 Kielce (PL)**
• **Dobranowski, Ryszard**
  **32-551 Babice (PL)**
• **Zietarski, Rafal**
  **28-230 Polaniec (PL)**

(74) Representative: **Fietko-Basa, Sylwia**
  **Kancelaria Patentowa**
  **Grazyna Basa**
  **Ul. Jagiellonska 59**
  **25-734 Kielce (PL)**

(54) **LIGHTWEIGHT HEAT-INSULATING PLASTER**

(57)    The invention concerns plaster, in particular lightweight heat-insulating (thermally insulating) plaster for use in residential buildings and others.

The gypsum-containing lightweight heat-insulating plaster is characterized in that it contains in parts by weight:
- 35-45 parts of construction gypsum,
- 20-30 parts of fine sand,
- 0.015-0.045 part of starch ether,
- 0.15-0.23 part of a water retention agent,
- 0.05-0.11 part of a gypsum retarder,
- 0.007-0.013 part of a thixotropic agent,
- 28-34 parts of a composite thermally insulating filler,
- 1.5-2.5 parts by weight of calcium hydroxide.

EP 4 382 500 A1

(52) Cooperative Patent Classification (CPC): (Cont.)

C-Sets
**C04B 28/145, C04B 14/06, C04B 18/082,**
**C04B 20/0076, C04B 22/064, C04B 24/04,**
**C04B 24/16, C04B 24/38, C04B 24/383;**
**C04B 28/145, C04B 14/06, C04B 18/082,**
**C04B 20/0076, C04B 22/064, C04B 24/38,**
**C04B 2103/0085, C04B 2103/22, C04B 2103/44**

**Description**

The invention concerns plaster, in particular lightweight heat-insulating (thermally insulating) plaster for use in residential buildings and others.

Gypsum plaster is the primary hemihydrate gypsum material (CaSO4·1/2H2O) combined with an additive. It is a good material promoted as an environmentally friendly decorative material.

Gypsum plaster is known in the art, as specified in PN-EN 13279-1, including:

- gypsum plaster: it consists of at least 50% calcium sulfate as the main binder and no more than 5% lime
- gypsum-based plaster: it consists of less than 50% calcium sulfate as the main binder and no more than 5% lime
- gypsum lime plaster: with components as for the two aforementioned types of plaster and containing more than 5% lime

The aforementioned types of plaster need to fulfill the following requirements:

- Onset of setting >20 min
- End of setting >50 min
- Bending strength >1 N/mm2
- Compressive strength >2.0 N/mm2
- Adherence to surface >0.1 N/mm2

According to the aforementioned standard, lightweight plaster contains lightweight inorganic aggregates, such as expanded perlite or vermiculite, or lightweight organic aggregates. The objective of this invention is to provide lightweight heat-insulating plaster with high compressive strength.

Heat-insulating gypsum plaster with a low content of construction gypsum (typically 35-45 wt%), also consisting of a filler (dry sand, microspheres) of 48-64 wt%, as a result of which the plaster has good construction properties with specified strength parameters. Simply increasing the content of construction gypsum to reduce filler content will affect performance of the structure, and improved compressive strength performance will still be limited.

The invention concerns lightweight heat-insulating plaster which contains the following components in parts by weight:

35-45 parts of construction gypsum,

20-30 parts of fine sand with a grain size of between 0.1 and 0.5 mm,

0.015-0.045 part of starch ether,

0.15-0.23 part by weight of a water retention agent,

0.05-0.11 part of a gypsum retarder,

0.007-0.013 part of a thixotropic agent,

28-34 parts of a composite thermally insulating filler,

1.5-2.5 parts of lime.

The construction gypsum as the binder is preferably in the form of calcium sulfate hemihydrate.

The sand as reinforcement of the system preferably has a grain size of between 0.1 and 0.5 mm.

The composite filler as the thermally insulating component is preferably in the form of microsilica, a waste material from coal combustion in power plants, containing aluminosilicates filled with carbon dioxide and nitrogen.

The thixotropic agent is preferably a mixture of sulfuric acid, sodium salts, ethoxylated, C12-C14 monoesters, alkyl.

The starch ether is preferably a refining additive which improves plaster consistency.

The water retention agent is preferably hydroxymethylcellulose.

The gypsum retarder is preferably tartaric acid.

Calcium hydroxide is preferably a compound which seals plaster consistency.

The lightweight plaster is preferably thermally insulating.

The lightweight heat-insulating plaster of the invention shows interaction between the construction gypsum, fine sand, starch ether, thixotropic agent, thermally-insulating composite filler in the form of microsilica, gypsum retarder in the form of tartaric acid and hydroxymethylcellulose as the water retention agent. The lightweight heat-insulating plaster has high compressive strength.

The lightweight heat-insulating plaster of the invention ensures improved thermal insulation properties of plaster in buildings. Analyses were performed of the heat transfer coefficient, energy performance and environmental performance, showing that using a plaster mix containing raw materials based on combustion byproducts instead of traditional plaster results in significantly reduced both the heat transfer coefficient and energy demand for heating and ventilation as well as decreased emissions of $CO_2$, total suspended particulate (TSP), sulfur oxides (SOx/SO2), nitrogen oxides (NOx/NO2) and carbon monoxide (CO). In addition, by using combustion byproducts in the form of microsilica in the plaster of the invention, waste from coal combustion can be utilized. Furthermore, the resulting improved thermal insulation rating does not lead to decreased strength performance.

Example 1.

In the first embodiment, the lightweight heat-insulating plaster consists of the following components: 35 parts by weight of gypsum powder in the form of calcium sulfate hemihydrate, 20 parts by weight of sand with a grain size of between 0.1 and 0.5 mm and 28 parts by weight of a thermally insulating composite filler which improves thermal conductivity in the form of microsilica, a waste material produced during coal combustion in a power plant, containing aluminosilicates filled with carbon dioxide and nitrogen, 0.05 part by weight of an agent in the form of tartaric acid as a gypsum retarder, 0.015 part by weight of starch ether as an additive to improve application and performance, 0.15 part by weight of a water retention agent of hydroxymethylcellulose and 0.007 part by weight of a thixotropic agent in the form of a mixture of sulfuric acid, sodium salts, ethoxylated, C12-C14 monoesters, alkyl, and 1.5 parts by weight of calcium hydroxide (a refining compound to improve application and seal plaster consistency).

Example 2.

In the second embodiment, the lightweight heat-insulating plaster consists of the following components: 40 parts by weight of gypsum powder in the form of calcium sulfate hemihydrate, 25 parts by weight of sand with a grain size of between 0.1 and 0.5 mm and 31 parts by weight of a thermally insulating composite filler which improves thermal conductivity in the form of microsilica, a waste material produced during coal combustion in a power plant, containing aluminosilicates filled with carbon dioxide and nitrogen, 0.08 part by weight of an agent in the form of tartaric acid as a gypsum retarder, 0.03 part by weight of starch ether, 0.19 part by weight of a water retention agent of hydroxymethylcellulose and 0.01 part by weight of a thixotropic agent in the form of a mixture of sulfuric acid, sodium salts, ethoxylated, C12-C14 monoesters, alkyl, and 2 parts by weight of calcium hydroxide.

Example 3.

In the third embodiment, the lightweight heat-insulating plaster consists of the following components: 45 parts by weight of gypsum powder in the form of calcium sulfate hemihydrate, 30 parts by weight of sand with a grain size of between 0.1 and 0.5 mm and 34 parts by weight of a thermally insulating composite filler which improves thermal conductivity in the form of microsilica, a waste material produced during coal combustion in a power plant, containing aluminosilicates filled with carbon dioxide and nitrogen, 0.11 parts by weight of an agent in the form of tartaric acid as a gypsum retarder, 0.045 parts by weight of starch ether as an additive to improve application and performance, 0.23 parts by weight of a water retention agent of hydroxymethylcellulose and 0.013 parts by weight of a thixotropic agent in the form of a mixture of sulfuric acid, sodium salts, ethoxylated, C12-C14 monoesters, alkyl, and 2.5 parts by weight of calcium hydroxide.

Example 4.

Analysis was performed of the effect on energy and environmental performance of using the lightweight heat-insulating plaster of the present invention containing raw materials based on combustion byproducts instead of a traditional plaster mix in a unit to be used as a laboratory, located on the second floor of a two-story building without a basement, constructed with traditional technology using precast components.

Values of the heat transfer coefficient for outer walls of the structure were analyzed, calculated according to standard PN-EN 6946 for:

• the outer wall in its original state, covered with cement lime plaster;

- the outer wall after removing the existing plaster and applying a gypsum plaster mix of the invention, containing raw materials based on combustion byproducts with thermal conductivity coefficient $\lambda=0.19$ W/mK, referred to as ELPO 0.19 below,
- the outer wall after removing the existing plaster and applying a cement plaster mix of the invention, containing raw materials based on combustion byproducts with thermal conductivity coefficient $\lambda=0.30$ W/mK, referred to as ELPO 0.30 below,

Calculations of heat transfer coefficients for the aforementioned walls are listed below:

outer wall with cement lime plaster

| | | Layer | $\lambda$ $[\frac{W}{mK}]$ | d [m] | R $[\frac{m^2K}{w}]$ |
|---|---|---|---|---|---|
| | 1 | $R_{si}$ | | | 0.13 |
| | 2 | Plaster or cement lime plaster finish | 0.82 | 0.015 | 0.018 |
| | 3 | Hollow silicate brick wall | 0.75 | 0.38 | 0.507 |
| | 4 | Plaster or cement lime plaster finish | 0.82 | 0.015 | 0.018 |
| | 5 | $R_{se}$ | | | 0.04 |
| $R_T = 0.713 \frac{m^2K}{w}$ ||||||
| $U = 1.402 \frac{w}{m^2K}$ ||||||

outer wall with the ELPO 0.19 thermally insulating plaster

| | | Layer | $\lambda$ $[\frac{W}{mK}]$ | d [m] | R $[\frac{m^2K}{w}]$ |
|---|---|---|---|---|---|
| | 1 | $R_{si}$ | | | 0.13 |
| | 2 | ELPO 0.19 plaster | 0.19 | 0.02 | 0.105 |
| | 3 | Hollow silicate brick wall | 0.75 | 0.38 | 0.507 |
| | 4 | Plaster or cement lime plaster finish | 0.82 | 0.015 | 0.018 |
| | 5 | $R_{se}$ | | | 0.04 |
| $R_T = 0.800 \frac{m^2K}{w}$ ||||||
| $U = 1.250 \frac{w}{m^2K}$ ||||||

outer wall with the ELPO 0.30 thermally insulating plaster

| | | Layer | $\lambda$ $[\frac{W}{mK}]$ | d [m] | R $[\frac{m^2K}{w}]$ |
|---|---|---|---|---|---|
| | 1 | $R_{si}$ | | | 0.13 |
| | 2 | ELPO 0.30 plaster | 0.30 | 0.02 | 0.067 |

(continued)

| | Layer | $\lambda$ $[\frac{w}{mK}]$ | d [m] | R $[\frac{m^2 K}{w}]$ |
|---|---|---|---|---|
| 3 | Hollow silicate brick wall | 0.75 | 0.38 | 0.507 |
| 4 | Plaster or cement lime plaster finish | 0.82 | 0.015 | 0.018 |
| 5 | $R_{se}$ | | | 0.04 |
| $R_T = 0.762 \frac{m^2 K}{w}$ | | | | |
| $U = 1.313 \frac{w}{m^2 K}$ | | | | |

Comparison of thermal coefficients

| | wall | U $[\frac{w}{m^2 K}]$ | Decrease in U [%] |
|---|---|---|---|
| 1 | with cement lime plaster | 1.402 | - |
| 2 | with ELPO 0.19 plaster | 1.250 | **10.84** |
| 3 | with ELPO 0.30 plaster | 1.313 | **6.35** |

Comparison of heat transfer coefficients showed that using plaster mixes containing raw materials based on combustion byproducts resulted in reduced coefficients: by 10.84% for the ELPO 0.19 plaster and by 6.35% for the ELPO 0.30 plaster.

A summary of environmental and energy tests is found in the table below.

| | | decrease in | | | | | |
|---|---|---|---|---|---|---|---|
| | | $Q_{H,nd}$ [kWh/year] [%] | $CO_2$ emission [kg/year] [%] | emission of total suspended particulate (TSP) [kg/year] [%] | emission of sulfur oxides (SOx/SO2) [kg/year] [%] | emission of nitrogen oxides (NOx/NO2) [kg/year] [%] | emission of carbon monoxide (CO) [kg/year] [%] |
| 1 | building with walls and ceiling covered with cement lime plaster | - | - | - | - | - | - |
| 2 | building with walls covered with ELPO plaster and ceiling covered with cement lime plaster | 6,630.59 4.97 | 5,291.84 4.97 | 0.21 4.97 | 3.76 4.97 | 4.24 4.97 | 1.71 4.97 |
| 3 | building with walls and ceiling covered with ELPO plaster | 16,849.96 12.63 | 13,447.82 12.63 | 0.54 12.63 | 9.56 12.63 | 10.77 12.63 | 4.36 12.63 |

Analyses of the heat transfer coefficient, energy performance and environmental performance showed that by using the lightweight heat-insulating plaster of the invention containing raw materials based on combustion byproducts instead of traditional plaster, the ELPO plaster results in significantly reduced both the heat transfer coefficient and energy demand QH,nd for heating and ventilation in the heated area, [kWh] as well as emissions of $CO_2$, total suspended particulate (TSP), sulfur oxides (SOx/SO2), nitrogen oxides (NOx/NO2) and carbon monoxide (CO) in the building. Therefore, the plaster of the invention has thermal insulation properties.

Example 5.

The method for the preparation of the lightweight heat-insulating plaster in this invention preferably consists of the following stages:

- blending the construction gypsum, fine sand, lime and thermally insulating composite filler to obtain the first mix;

- blending the starch ether, the water retention agent in the form of hydroxymethylcellulose and the gypsum retarder in the form of tartaric acid to obtain the second mix;

The first mix, the second mix and the thixotropic agent are blended to obtain the lightweight heat-insulating plaster.

The lightweight heat-insulating plaster of the present invention contains construction gypsum, lime, a starch ether, a gypsum retarder, fine sand, a thermally insulating composite filler, a thixotropic agent and hydroxymethylcellulose. Incorporation of the water retention agent in the form of hydroxymethylcellulose may fulfill the viscosity, strength and cracking resistance requirements.

**Claims**

1. Gypsum-containing lightweight heat-insulating plaster **characterized in that** it contains in parts by weight:

    - 35-45 parts of construction gypsum,
    - 20-30 parts of fine sand,
    - 0.015-0.045 part of starch ether,
    - 0.15-0.23 part of a water retention agent,
    - 0.05-0.11 part of a gypsum retarder,
    - 0.007-0.013 part of a thixotropic agent,
    - 28-34 parts of a composite thermally insulating filler,
    - 1.5-2.5 parts by weight of calcium hydroxide.

2. The lightweight plaster of claim 1, **characterized in that** it contains the following composition in parts by weight:

    - 35 parts of construction gypsum,
    - 20 parts of fine sand,
    - 28 parts of a composite thermally insulating filler,
    - 0.007 part of a thixotropic agent,
    - 0.015 part of starch ether,
    - 0.15 part of a water retention agent,
    - 0.05 part of a gypsum retarder,
    - 1.5 parts by weight of calcium hydroxide.

3. The lightweight plaster of claim 1, **characterized in that** it contains the following composition in parts by weight:

    - 40 parts of construction gypsum,
    - 25 parts of fine sand,
    - 31 parts of a composite thermally insulating filler,
    - 0.01 part of a thixotropic agent,
    - 0.03 part of starch ether,
    - 0.19 part of a water retention agent,
    - 0.08 part of a gypsum retarder,
    - 2.0 parts by weight of calcium hydroxide.

4. The lightweight plaster of claim 1, **characterized in that** it contains the following composition in parts by weight:

    - 45 parts of construction gypsum,
    - 30 parts of fine sand,
    - 34 parts of a composite thermally insulating filler,
    - 0.013 part of a thixotropic agent,
    - 0.045 part of starch ether,
    - 0.23 part of a water retention agent,

- 0.11 part of a gypsum retarder,
- 2.5 parts by weight of calcium hydroxide.

5. The lightweight plaster of claim 1, **characterized in that** the construction gypsum as the binder is in the form of calcium sulfate hemihydrate.

6. The lightweight plaster of claim 1, **characterized in that** the sand as system reinforcement has a grain size of between 0.1 and 0,5 mm.

7. The lightweight plaster of claim 1, **characterized in that** the composite filler as the thermally insulating component is in the form of microsilica, a waste material from coal combustion in power plants, containing aluminosilicates filled with carbon dioxide and nitrogen.

8. The lightweight plaster of claim 1, **characterized in that** the thixotropic agent is a mixture of sulfuric acid, sodium salts, ethoxylated, C12-C14 monoesters, alkyl.

9. The lightweight plaster of claim 1, **characterized in that** the starch ether is a refining additive which improves plaster consistency.

10. The lightweight plaster of claim 1, **characterized in that** the water retention agent is hydroxymethylcellulose.

11. The lightweight plaster of claim 1, **characterized in that** the gypsum retarder is tartaric acid.

12. The lightweight plaster of claim 1, **characterized in that** calcium hydroxide is a compound which seals plaster consistency.

13. The lightweight plaster of claim 1, **characterized in that** it is thermally insulating.

Europäisches Patentamt

European Patent Office

Office européen des brevets

# EUROPEAN SEARCH REPORT

Application Number

EP 22 46 0067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 340 345 A (BEIJING NEW BUILDING MAT CO LTD ET AL.) 15 November 2022 (2022-11-15) * paragraphs [0002], [0014] * * claims 1-7 * | 1-13 | INV. C04B28/14 ADD. C04B111/28 |
| A | CN 113 213 808 A (GUANGDONG LONGHU SCI & TECH CO LTD; MIANYANG POLYTECHNIC) 6 August 2021 (2021-08-06) * paragraph [0006] * * claims 1-10 * | 1 | |
| A | CN 108 530 009 A (SHEN ZHIBIN) 14 September 2018 (2018-09-14) * examples 1-4 * | 1 | |
| A | US 2019/367421 A1 (DENGLER JAOCHIM [DE] ET AL) 5 December 2019 (2019-12-05) * paragraph [0054] – paragraph [0056] * | 1 | |
| A | CN 109 665 794 A (TAISHAN GYPSUM CO LTD) 23 April 2019 (2019-04-23) * claims 1-10 * | 1 | TECHNICAL FIELDS SEARCHED (IPC) C04B |
| A | CN 108 793 917 A (WUHAN WALLPRO HIGH TECH CO LTD) 13 November 2018 (2018-11-13) * claims 1-10 * | 1 | |

The present search report has been drawn up for all claims

| Place of search | Date of completion of the search | Examiner |
|---|---|---|
| The Hague | 27 May 2023 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 46 0067

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2023

| Patent document cited in search report | | Publication date | Patent family member(s) | | Publication date |
|---|---|---|---|---|---|
| CN 115340345 | A | 15-11-2022 | NONE | | |
| CN 113213808 | A | 06-08-2021 | NONE | | |
| CN 108530009 | A | 14-09-2018 | NONE | | |
| US 2019367421 | A1 | 05-12-2019 | CN | 110023267 A | 16-07-2019 |
| | | | EP | 3541766 A1 | 25-09-2019 |
| | | | JP | 7118963 B2 | 16-08-2022 |
| | | | JP | 2019536872 A | 19-12-2019 |
| | | | KR | 20190087481 A | 24-07-2019 |
| | | | RU | 2019118408 A | 21-12-2020 |
| | | | US | 2019367421 A1 | 05-12-2019 |
| | | | WO | 2018091659 A1 | 24-05-2018 |
| CN 109665794 | A | 23-04-2019 | NONE | | |
| CN 108793917 | A | 13-11-2018 | NONE | | |

EPO FORM P0459

For more details about this annex : see Official Journal of the European Patent Office, No. 12/82